(19) Europäisches Patentamt
European Patent Office
Office européen des brevets

(11) **EP 4 117 060 A1**

(12) **EUROPÄISCHE PATENTANMELDUNG**

(43) Veröffentlichungstag:
**11.01.2023   Patentblatt 2023/02**

(21) Anmeldenummer: **21184782.7**

(22) Anmeldetag: **09.07.2021**

(51) Internationale Patentklassifikation (IPC):
**H01M 8/0206** (2016.01)    **H01M 8/0208** (2016.01)
**H01M 8/021** (2016.01)    **H01M 8/0226** (2016.01)
**H01M 8/18** (2006.01)

(52) Gemeinsame Patentklassifikation (CPC):
**H01M 8/0206; H01M 8/0208; H01M 8/021;**
**H01M 8/0226; H01M 8/18**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hochschule Rheinmain University of Applied**
**Sciences Wiesbaden Rüsselsheim**
**65197 Wiesbaden (DE)**

(72) Erfinder:
• **Arz, Yannick**
**Erlenweg 19 68642 Bürstadt (DE)**
• **Keßler, Yannic L.**
**Goethestraße 4A 65830 Kriftel (DE)**
• **Gleichmann, Martin**
**Suderstraße 8-1 65428 Rüsselsheim (DE)**
• **Scheppat, Birgit**
**St.Ulrich Str. 65468 Trebur (DE)**

(74) Vertreter: **Stumpf, Peter**
**c/o TransMIT GmbH**
**Kerkrader Strasse 3**
**35394 Gießen (DE)**

(54)   **VERBESSERTES VERFAHREN ZUR HERSTELLUNG EINER POLARPLATTE**

(57)   Die Erfindung betrifft ein Verfahren zur Herstellung einer Polarplatte für Brennstoffzellen und/oder Redox-Flow-Batterien umfassend folgende Schritte
I. Auftragen der Schichten zur Erzeugung eines Rohlings, wobei ein Komposit aus Druckmaterial schichtweise auf eine Werkebene aufgetragen wird und so ein Rohling der Polarplatte erzeugt wird,

II. Sintern, wobei der Rohling der Polarplatte aus Schritt II erhitzt wird, wobei die Temperaturen unterhalb der Schmelztemperatur des Druckmaterials bleiben, so dass die Gestalt (Form) des Werkstückes erhalten bleibt und nach Anschluss des Schrittes eine fertige Polarplatte erzeugt wird.

**EP 4 117 060 A1**

## Beschreibung

Die vorliegende Erfindung betrifft ein verbessertes Verfahren zur Herstellung einer Polarplatte insbesondere zur Verwendung dieser für eine Brennstoffzelle oder Redox-Flow-Batterie.

## Stand der Technik

Eine Brennstoffzelle ist eine elektrochemische Zelle, welche chemische Energie eines Brennstoffes durch eine elektrochemische Reaktion in Elektrizität wandelt. Es existieren verschiedene Typen von Brennstoffzellen.

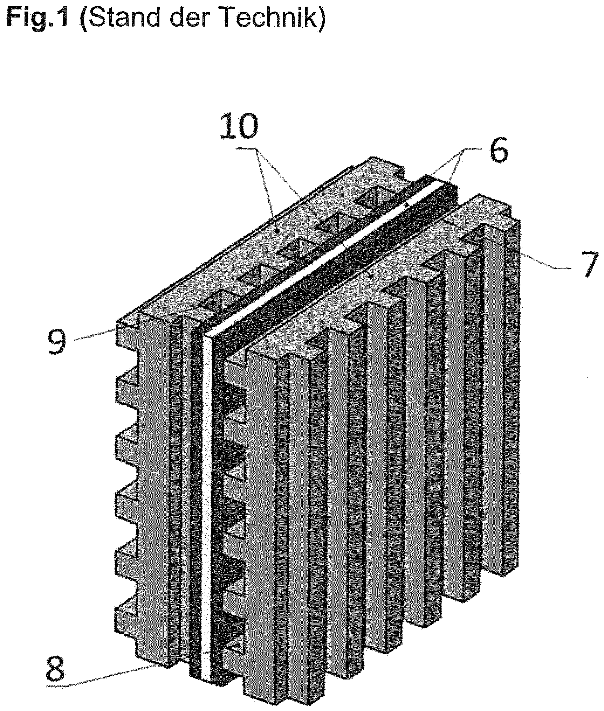

Ein spezieller Brennstoffzellentyp ist die Protonenaustauschmembran-Brennstoffzelle (Proton- Exchange-Membran, PEM-Brennstoffzelle). In einer Brennstoffzelle reagiert ein kontinuierlich zugeführter Brennstoff (zum Beispiel Wasserstoff $H_2$) mit einem Oxidationsmittel (zum Beispiel Sauerstoff $O_2$). Dabei entstehen Wasser ($H_2O$), Strom und Wärme. Diese elektrochemische Reaktion wird auch als "kalte Verbrennung" bezeichnet und ist besonders effizient. Einen schematischen Aufbau einer solchen bereits bekannten Brennstoffzelle zeigt die Abbildung Fig.1. In diesen Brennstoffzellentypen sind neben Membranen, Elektroden und einem Katalysator auch sogenannte Polarplatten vorgesehen.

Eine Redox-Flow-Batterie ist analog einer Brennstoffzelle eine elektrochemische Zelle, welche elektrische Energie mithilfe eines Elektrolyten einspeichert oder ausspeichert. Primärer Faktor für die Leistung ist die Größe der Austauschmembran wohingegen die Kapazität primär durch die Größe der Tanks definiert wird. Besonders zeichnen sich Redox-Flow-Batterien durch ihr niedriges Brandrisiko sowie eine hohe Zyklusstabilität aus. Der Aufbau der Redox-Flow-Batterie ähnelt dabei dem Aufbau einer PEM-Brennstoffzelle bestehend aus einer Austauschmembran, den zugehörigen Tanks und Pumpen sowie Polarplatten.

Diese elektrisch leitenden Platten (Polarplatten) dienen dazu, den elektrischen Strom als Elektroden zu leiten und außerdem ein Fluid durch entsprechend angeordnete Strömungskanäle zu führen. Brennstoffzellen bzw. Brennstoffzellenstapel sowie Redox-Flow-Stapel sind aus abwechselnd übereinander angeordneten Membranelektrodeneinheiten bzw. Polarplatten aufgebaut. Hierbei dienen die Polarplatten zur Versorgung der Elektroden mit Edukten und zur Kühlung des Brennstoffzellenstapels. Polarplatten bringen zur Aufrechterhaltung der elektrochemischen Reaktion im Brennstoffzellenstapel die anodenseitig gebildeten Elektroden vorteilhaft unter möglichst geringem elektrischem Widerstand auf die Kathodenseite der benachbarten Zelle. Das bedeutet, dass neben einer guten Bulkleitfähigkeit insbesondere auch die Kontaktübergangswiderstände so gering wie möglich sein sollten.

Diese Polarplatten sind Kernelemente eines jeden PEM-Brennstoffzellen-Stacks sowie eines Redox-Flow-Batterie-Stacks. Über sie wird die Zufuhr von Wasserstoff sowie Luft bzw. im Fall der Redox-Flow Batterie von Elektrolyten und auch im Falle der Brennstoffzelle die Abfuhr von Wasserdampf beziehungsweise in beiden Fällen die Abgabe von thermischer und elektrischer Energie geregelt. Die Gestaltung ihres Flow-Fields hat einen wesentlichen Einfluss auf die Höhe des Wirkungsgrads des gesamten Aggregats. Dabei können sich Polarplatten deutlich voneinander unterscheiden - sowohl hinsichtlich ihrer Größe als auch in Bezug auf ihre Herstellungsweise.

Für die Materialwahl und Ausgestaltung der Polarplatten können neben dünnen, strukturgeprägten Metallfolien, die in der Regel einen Korrosionsschutz benötigen und reinen Graphitplatten, die zwar eine hohe chemische Resistenz und gute Kontaktübergangswiderstände zeigen, dafür aber aufwändig zu bearbeiten sind, auch Platten aus hochgefüllten Graphit-basierten thermoplastischen oder härtbaren Kompositen zum Einsatz kommen, welche die guten Funktionseigenschaften von Graphit mit einer einfacheren und kostengünstigeren Formgebung kombinieren. Grundsätzlich lässt sich Folgendes feststellen: Je größer die Platten, desto höher ist die Stromstärke einer Einzelzelle, da mit ihrer Größe auch die wirksame Fläche der Polymer-Elektrolyt-Membranen (PEM) korrespondiert. Und je mehr Wasserstoff pro Zeiteinheit umgesetzt werden kann, desto höher ist der Stromfluss. Diese, für eine hohe Umsetzungsrate optimierten, Platten haben eine komplexe Struktur von Fließkanälen für Flüssigkeiten und Leitungen für den Transfer von Gasen.

Zur Herstellung von Polarplatten wurden verschiedene Verfahren vorgeschlagen.

Ein erstes Herstellungsverfahren ist das grad- und spannungsfreie Ätzen von Polarplatten. Beim Ätzverfahren wird Metall zeitgleich entfernt. So können auf beiden Seiten der Polarplatte komplexe Kanäle oder Strömungsfelder mit 0,025 mm - bei einer Präzision von ± 0,025 mm - geätzt werden. Die Größe und Form der Kanäle variiert. Verteiler, Abnehmer und Schnittstellenmerkmale können leicht eingebaut werden. Eine besonderes Ätzverfahren ist das photochemische Ätzen. Hierbei gibt es keine mechanischen oder thermischen Belastungen der Polarplatten, welche die Verbindung der Stapel beeinträchtigen könnten.

Geätzte Polarplatten werden üblicherweise aus Edelstählen der Güte 316 oder 904 hergestellt. Es können aber auch exotische und schwer zu bearbeitende Metalle geätzt werden, beispielsweise Titan für ein geringeres Gewicht und maximale Korrosionsbeständigkeit.

Alternativ werden die Polarplatten z.B. mit CNC-Bearbeitung und Stanzen erzeugt. Allerdings hat dies den Nachteil, dass die Ebenheit der Polarplatte beeinträchtigt wird und Belastungen und Grate verursacht werden.

Aus den Druckschriften DE 10 2017 201 703 A1 und WO 2008/049099 A1 gehen Materialvorschläge sowie Ausgestaltungsmöglichkeiten für Bipolarplatten hervor, wobei die in der WO 2008/049099 A1 vorgeschlagenen Polyhydroxyalkanoate sich in deionisiertem Wasser zersetzen können, insbesondere unter Wärmeeinfluss.

Ein bisher für Polarplatten nicht genutztes Verfahren ist das "Fused Filament Fabrication" (Kurz FFF)-Verfahren bzw. das "Fused Granular Fabrication" (Kurz FGF-Verfahren). Hierbei wird ein meist auf Basis bestehendes Filament durch eine Düse gedrückt oder im Falle des FGF-Verfahrens ein Granulat mittels Extruderschnecke durch eine Düse gedrückt, dabei aufgeschmolzen und durch Positionierung der beweglichen Düse oder durch einen verfahrbaren Tisch oder einer Kombination aus beiden ein Bauteil in einer Schichtstruktur aufgebaut. Aufgrund der typischen Charakteristika von Thermoplasten haben diese Materialien sehr niedrige elektrische und thermische Leitwerte. Deshalb ist es bislang nicht möglich, effektive Wasserstoffbrennstoffzellen oder Redox-Flow-Batterien-Stacks mittels eines FFF - Druckverfahrens oder eines FGF - Druckverfahrens herzustellen.

## Aufgabe

Aufgabe der vorliegenden Erfindung ist es ein verbessertes Verfahren zur Herstellung von Polarplatten bereitzustellen, das die Nachteile im Stand der Technik beseitigt.

## Lösung der Aufgabe

Diese Aufgabe wird erfindungsgemäß gelöst durch ein Verfahren gemäß der Ansprüche 1 bis 11.

Wie bei jedem 3D-Druck Verfahren ist auch hier die Grundvoraussetzung ein druckfähiges, digitales 3D-Modell. Dieses Modell wird von einem Computerprogramm in eine Vielzahl von Schichten zerlegt (slicen), welche dann die Grundlage des eigentlichen Herstellungsverfahrens sind.

Das erfindungsgemäße Verfahren zur Herstellung der Polarplatte erfolgt anhand dieses vorab erzeugten Modells.

Bei der hergestellten Polarplatte kann es sich um eine Monopolarplatte oder eine Bipolarplatte handeln.

Es umfasst dabei folgende Schritte:

### I. Auftragen der Schichten zur Erzeugung eines Rohlings

Dabei wird ein Komposit aus Druckmaterial mit einem optionalen Bindemittel schichtweise auf eine Werkebene aufgetragen. Das Austragen erfolgt vorzugsweise mit einem Extruder. Der Extruder ist eine beheizbare Düse. Das Material, mit dem gedruckt wird, wird durch den Extruder erhitzt, bis es sich verflüssigt bzw. schmilzt. Dieses flüssige bzw. geschmolzene Material wird durch den Extruder entsprechend der Schichten des 3D-Modells auf die Werkebene aufgetragen. Sobald das Material abkühlt, härtet es schnell aus. Auf eine ausgehärtete Schicht wird die nächste Schicht des flüssigen bzw. geschmolzenen Materials aufgetragen. So entsteht Schicht für Schicht das reale Abbild der Polarplatte.

Das Druckmaterial ist dabei in einer ersten Ausführungsform des erfindungsgemäßen Verfahrens als Filament ausgebildet. In diesem Fall wird das Komposit unter Anwendung eines FFF-Verfahrens durch die Düse gedrückt.

Vorzugsweise erfolgt das Auftragen durch das Ablegen einzelner Bahnen des Filaments. Damit wird auch die Form der resultierenden Polarplatte festgelegt. Alternativ ist das Druckmaterial als Granulat ausgebildet. In diesem Fall wird das Druckmaterial mittels eines FGF-Verfahrens durch die Düse befördert. Dies geschieht beispielsweise über eine am Extruder angeordnete Förderschecke.

Das Komposit enthält vorzugsweise neben dem eigentlichen Druckmaterial noch Bindemittel (auch als Binder bezeichnet), welches das Material erst druck- und haftfähig macht. Dieses Bindemittel muss vor dem eigentlichen Sintern noch entfernt werden.

Das Komposit kann dabei Polymere, vorzugsweise Thermoplaste und/oder thermoplastische Elastomere und/oder metallische Bestandteile bzw. keramische Bestandteile umfassen.

Beispiele für metallische Bestandteile sind ein vanadium-legierter Stahl mit wenigstens 0,1% Vanadium, edelmetall-legierter Stahl mit wenigstens 0,1 % eines Edelmetalls (z.B. Gold, Silber, und/oder Platin) und aluminium-legierter Stahl mit wenigstens 0,1% Aluminium sowie alle Kombination dieser.

Alternativ besteht das Komposit oder der metallische Bestandteil des Komposits nur aus einem einzigen elementar vorliegenden Metall ausgewählt aus der Gruppe Gold, Silber, Chrom, Eisen, Kupfer, Aluminium, Zink, Nickel, Platin, Caesium, Wolfram, Osmium, Quecksilber, Blei oder Zinn.

Als Metalllegierung für Polarplatten kommen insbesondere wasserstoffstabile Stähle mit wenigstens 0,1% Vanadium in Frage. Dazu gehören z.B. V4A-Stähle. V4A steht hierbei für die CrNiMo-Stähle 1.4401, 1.4571 und 1.4404. Ein besonders geeignetes Komposit ist Ultrafuse 316L (BASF).

Wenn das Komposit als Filament ausgebildet ist, kann dieses wenigstens ein Polymer und wenigstens ein Metall umfassen oder nur aus metallischen Komponenten ausgebildet sein.

Falls das Komposit aus Schritt I einen Binder enthält erfolgt deshalb als nächster Schritt Ib das Entbindern.

### Ia. Entbindern

Beim Entbindern wird ein großer Teil des Binders in der ersten Stufe durch katalytische Zersetzung, durch thermische Verdampfung, Zersetzung oder durch Lösungsmittelextraktion entfernt. Ein typisches Entbindern erfolgt bei 120 °C mit Formaldehyd HNO (< 98 %). Beim Entbindern kann es zu einer geometrischen Schrumpfung des Bauteils kommen.

## II. Sintern

Sintern ist ein Verfahren zur Herstellung oder Veränderung von Werkstoffen. Dabei werden feinkörnige keramische oder metallische Stoffe erhitzt, wobei die Temperaturen jedoch unterhalb der Schmelztemperatur der Hauptkomponenten bleiben, so dass die Gestalt (Form) des Werkstückes erhalten bleibt.

Die Sinterung sollte in einer Atmosphäre mit 100% sauberem und trockenem Wasserstoff (Taupunkt > - 40 °C) oder Argon (Taupunkt > - 40 °C) erfolgen. Als Material für die Sinterträger dient vorzugsweise $Al_2O_3$ von beispielsweise 99,6%iger Reinheit.

Ein typischer Sinterzyklus besteht aus

1. einer ersten Heizperiode bei Temperaturen von 20°C bis 600°C mit einer Rate von 5 K/min
2. einer Ruhephase von 1h bei einer Temperatur von 600°C
3. einer zweiten Heizperiode von 600°C bis 1380°C mit einer Rate von 5K/min
4. einer Sinterperiode von 3h bei 1380°C
5. Kühlperiode von 1380°C auf 20°C

Beim Sintern reagieren die Reste der Bindemittel mit den restlichen Bestandteilen des Druckmaterials und mit der Gasatmosphäre und werden thermisch zersetzt. In der ersten Heizperiode des Sinterprozesses werden somit die restliche Binderbestandteile verbrannt und die Pyrolyseprodukte durch ein Absauggebläse entfernt. Die Gasatmosphäre kann mit dem Druckmaterial so reagieren, dass sie Oxide reduziert oder Kohlenstoff abträgt. Die verschiedenen Reaktionen des Druckmaterials und des Bindemittelrückstands sowie zwischen Druckmaterial und Atmosphäre beeinflussen oft die mechanischen und chemischen Eigenschaften der gesinterten Bauteile, oft über den Kohlenstoffgehalt im Gefüge.

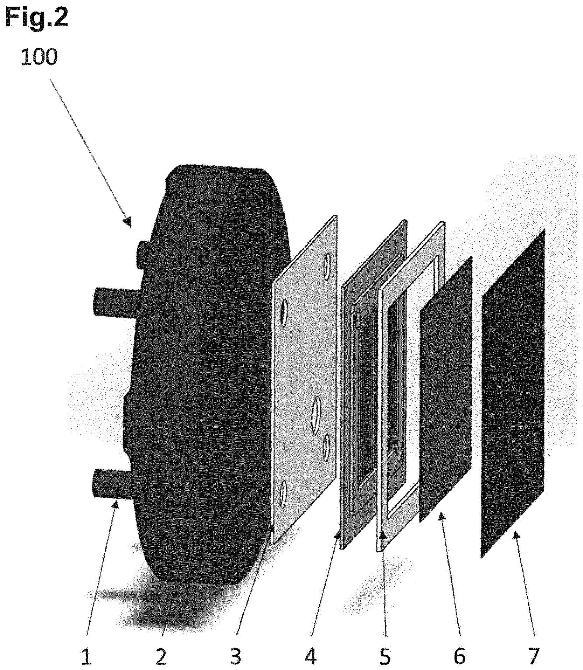

Durch die Verwendung des FFF - Verfahrens oder FGF - Verfahrens lassen sich bauraumoptimierte Brennstoffzellen herstellen. Dies erlaubt sowohl eine Durchführung durch die Brennstoffzelle für beispielsweise mechanische oder elektrische sowie Fluidsysteme. Weiterhin können beispielsweise blinde Medienanschlüsse direkt in das Bauteil integriert werden. Durch die Verwendung eines in Relation kostengünstigen Druckers auf Basis des FFF- oder FGF-Verfahrens können die Vorteile der Designfreiheit genutzt werden, die Kosten für einen konventionellen pulverbasierten 3D Drucker vermieden werden und bauraumoptimierte Brennstoffzellen in beliebiger Seriengröße hergestellt werden. Diese Brennstoffzelle ist beispielhaft in der Abbildung Fig.2 gezeigt.

Durch die direkte Umsetzung eines 3D Modells zu einer fertigen Brennstoffzelle können sich somit jegliche 3-dimensionale Struktur einer Brennstoffzelle darstellen (gewickelt, tordiert, ohne jegliche Symmetrie). Dabei können die Polarplatten in x,y, und z - Achse diese Designfreiheit nutzen und bauraumoptimiert an den Bedarf angepasst werden (optimiertes Packaging). Weiterhin lassen sich innenliegende Fluidkanäle (z.B. Medien- und Kühlkanale) restriktionsfrei anpassen. Da der 3D Druck nicht an ein formgebendes Mutterwerkzeug gebunden ist, lassen sich beliebige Seriengrößen individuell bedarfsgerecht anpassen. Insbesondere lassen sich Brennstoffzellen entwickeln, welche neben der eigentlichen Funktion der Energieerbringung auch bestehender Teil der tragenden Struktur sind. Somit kann die Brennstoffzelle selbst Teil eines tragenden Rahmens oder ähnliches werden und Komponenten direkt in den Rahmen verbaut werden. Neben konkaven oder konvexen Brennstoffzellen sind auch tordierte oder rotierte Brennstoffzellen möglich, welche sich bedarfsgerecht in eine Struktur einbringen lassen und je nach Anwendung leistungsoptimiert sind. Weiterhin können beispielsweise Kühlkanäle der Brennstoffzelle als Versorgung einer Sekundäranwendung bedarfsgerecht angepasst werden. Weiterhin kann bedarfsgerecht innerhalb des Flowfields eine Verjüngung des Kanals innerhalb der x-y - Ebene als auch eine x oder y als auch z Ebene eingebracht werden, um beispielsweise Druckspitzen innerhalb der Brennstoffzelle zu erzeugen oder zu reduzieren bzw. Strömungsgeschwindigkeiten anzupassen. Durch die Einstellung des Infills lassen sich Brennstoffzellen mit sehr niedrigem Gewicht herstellen. Mit Infill bezeichnet man die Menge des zu verbauenden Materials in Inneren des gewünschten 3D-Modells.

Die mittels des erfindungsgemäßen Verfahrens hergestellte Polarplatte ist dabei vorzugsweise so ausgebildet, dass sie mindestens einen spezifischen Leitwert von $> 0.005 \frac{m}{\Omega \, mm^2}$, gemessen bei 20 °C, bevorzugt einen spezifischen Leitwert von $> 0.1 \frac{m}{\Omega \, mm^2}$, gemessen bei 20 °C, besonders bevorzugt einen Leitwert von $> 1 \frac{m}{\Omega \, mm^2}$, gemessen bei 20 °C, aufweist.

## Ausführungsbeispiele

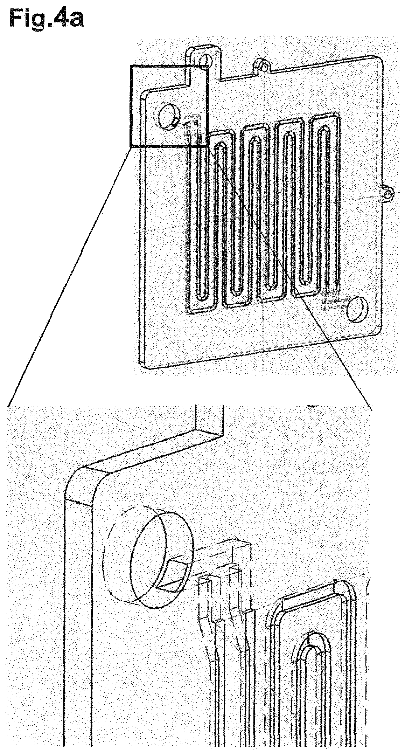

In einer bevorzugten Ausführungsform der mittels des erfindungsgemäßen Verfahrens hergestellten Polarplatte umfasst diese mindestens einen innenliegende fluiddurchströmbaren Kanal. Dies ist beispielhaft in der Abbildung Fig.4a gezeigt. Dieser Kanal dient entweder zum Transport von Reaktionsfluiden (z.B. $H_2$, $H_2O$, $O_2$, $CH_4$...) oder Kühlmitteln. Der Querschnitt des Kanals ist hierbei frei wählbar. Dieser kann rechteckig, quadratisch, rund, ellipsoid oder freigeformt sein und sich ebenfalls bedarfsoptimiert sowohl im Querschnitt als auch in der Form anpassen.

Wenn das Komposit als Filamente ausgebildet ist, liegt der Filamentdurchmesser bevorzugt bei 1 mm bis 4 mm. Typische Filamentdurchmesser sind 1,75 mm oder 2,85 mm. Dies führt abhängig von der verwendeten Düse zu einer Schichtdicke von üblicherweise 0,05 mm bis 1 mm, wobei auch größere Schichtdicken möglich sind.

Wenn das Komposit als Granulat ausgebildet ist, liegt der übliche Granulatdurchmesser bei 0,5 mm bis 10 cm, bevorzugt bei 1 mm bis 50 mm, besonders bevorzugt bei 2 mm bis 3 mm. Ebenso kann das Granulat auch in zylindrischer Form vorliegen, wobei die Länge dann zwischen 0,1 mm und 10 cm, bevorzugt bei 1 mm bis 50 mm, besonders bevorzugt bei 2 mm bis 3 mm liegt.

Eine typisches Komposit zur Erzeugung von Polarplatten nach dem erfindungsgemäßen Verfahren umfasst ein Metall oder eine Metalllegierung, welches in eine Polymermatrix, bevorzugt in eine thermoplastische Polymermatrix eingebettet ist. Das Metall dient hier als Druckmaterial und die Polymermatrix als Bindemittel. Damit sind grundsätzlich die handelsüblichen Metall-Polymer-Verbundfilament zur Herstellung von Metallteilen aus einem austenitischen Edelstahl Typ 316L mit Standard-FFF-Druckersystemen und anschließendem branchenüblichen Entbinderungs- und Sinterungsprozess geeignet. Weitere Metall-Kunststofffilamente wie beispielsweise Kupfer-, Bronze-, Messing-, Gold-, Silber-, und Aluminiumfilament sowie jegliche Kombinatorik bzw. Legierungen sowie im Falle des FGF-Verfahrens deren Granulatformen lassen sich ebenfalls mit diesem Verfahren verarbeiten. Weiterhin ist eine Kombination aus Metallfilament sowie Keramikfilament als auch reine Keramiken sowie deren Granulatformen ebenso denkbar.

Verschiedene Ausführungsvarianten sind in den Abbildungen Fig.2 bis Fig.5 gezeigt. Abbildung Fig.2 zeigt einen Aufbau einer Monozelle. Das Gehäuse besteht aus einem 3D gedruckten Thermoplasten, die Dichtungen bestehen aus einem 3D gedruckten thermoplastischen Elastomer wobei auch geeignete Thermoplaste wie beispielsweise Polypropylen oder Polyethylen sowie Mischungen verschiedener Polypropylene und Polyethylene geeignet sind. Die Monopolarplatte besteht aus einem Metallfilament, welches im späteren Sinterprozess zur finalen Monopolarplatte versintert wird. Innenliegende Kanäle können - sofern notwendig - mittels wasserlöslicher Stützstrukturen (BVOH, PVA und weiterer) verfüllt werden und direkt nach dem Druckprozess mittels Wasser oder einem geeigneten Lösemittel ausgelöst werden.

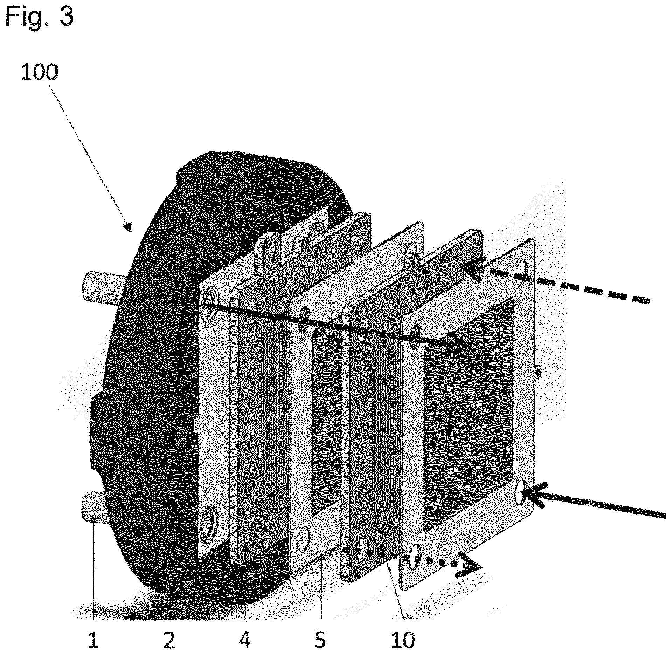

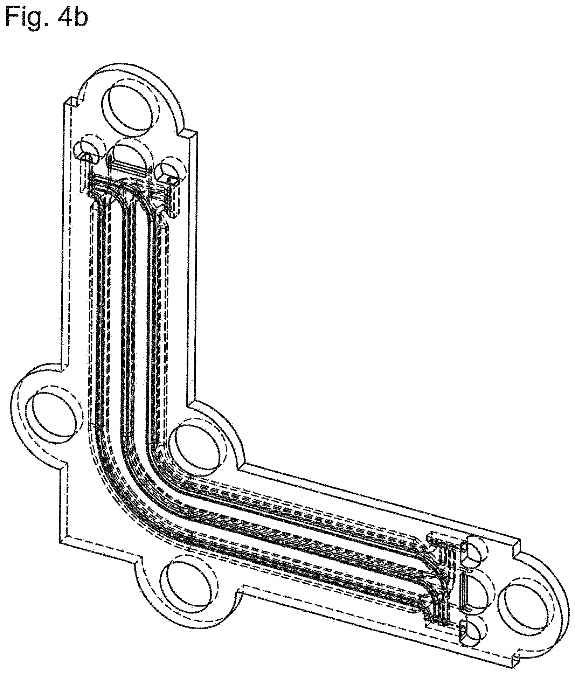

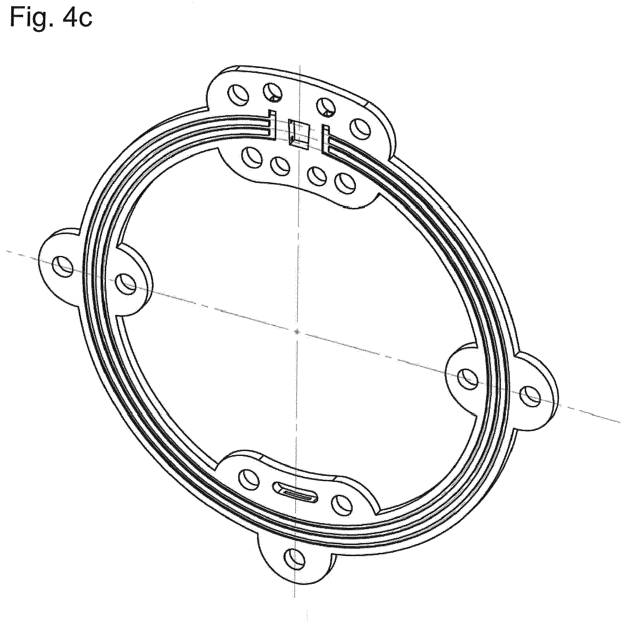

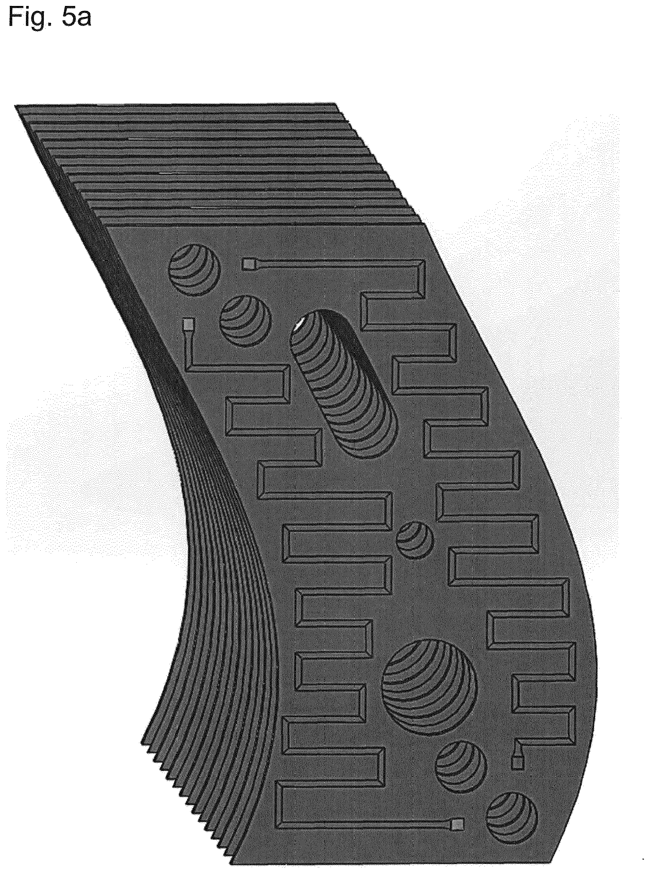

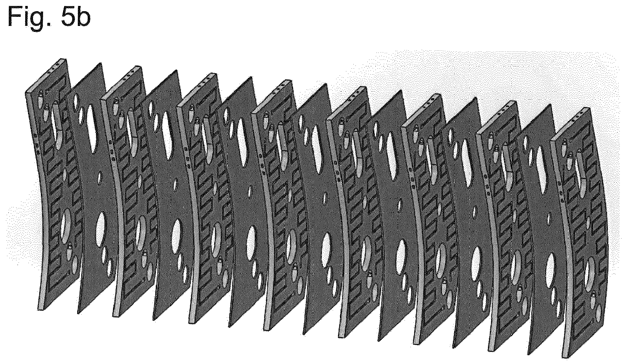

Die Abbildung Fig.3 zeigt den schematischen Aufbau der Brennstoffzelle als Mehrzeller. Hierbei beinhaltet das Gehäuse mindestens einen Thermoplast, die Dichtung ein thermoplastisches Elastomer (TPU, TPE oder weitere). Die in der Abbildung Fig.3 gezeigte Polarplatte wurde analog der Monopolarplatte, welche in Fig.2 zeigt, gefertigt. Hierbei zeigt die Abbildung Fig.4a die innenliegende Fluidkanäle, die jegliche beliebige und optimierte Querschnitte einnehmen können. Die Abbildungen Fig.4b und Fig.4c zeigen exemplarisch unterschiedliche Designs der Polarplatten mit innenliegenden Fluidkanälen. Hierbei eignet sich die Variante aus Fig. 4b als Haltewinkel, welcher konstruktiv zu Verbindung zweier Elemente eingesetzt werden kann und darüber hinaus die Funktion der Energieversorgung erfüllt. Die Variante aus Fig. 4c zeigt eine ringförmige Brennstoffzelle. Diese Brennstoffzelle erlaubt die Anbringung an eine Rohrleitung und kann beispielsweise direkt als Wärmetauscher dienen. Weiterhin eignet sich dieses Design als Stützstruktur mit hoher Festigkeit und niedrigem Gewicht beispielsweise für den Einsatz in der Luft- und Raumfahrt. Fig. 5a und 5b zeigen einen Polarplattenstack mit mehreren Durchführungen für beispielsweise mechanische Strukturen oder elektrische Leitungen wie auch Medienleitungen. Hierbei wird verdeutlicht, dass eine Brennstoffzelle hergestellt mit dem erfindungsgemäßen Verfahren jegliche beliebige Struktur annehmen kann und sich bedarfsgerecht, platzoptimiert in eine Bestandstruktur fügt.

## Abbildungslegenden und Bezugszeichenliste

Fig. 1 Schematischer Aufbau einer PEM Brennstoffzelle (Stand der Technik)

Fig. 2 Aufbau einer Brennstoffzelle mit der erfindungsgemäßen Monopolarplatte

Fig. 3 Aufbau einer Brennstoffzelle mit der erfindungsgemäßen Polarplatte

Fig. 4a bis c verschiedene Varianten einer Polarplatte mit innenliegenden Kanälen

Fig 5a bis b verschiedene Varianten eines Stacks mit innenliegenden Durchführungen für mechanische oder elektrische Strukturen

## Bezugszeichen

| 1 | Medienschlüsse |
|---|---|
| 2 | Endplatte |
| 3 | Dichtung Medienanschluss |
| 4 | Monopolarplatte |
| 5 | Dichtung Flowfield |
| 6 | Gasdiffusionsschicht |
| 7 | Protonenaustauschmembran |
| 8, 9 | Fluidkanal |
| 10 | Polarplatte |
| 100 | Brennstoffzelle |
| - | Wasserstoff-Fluss |
| - - - | Luft-Fluss |

**Patentansprüche**

1. Verfahren zur Herstellung einer Polarplatte für Brennstoffzellen und/oder Redox-Flow-Batterien umfassend folgende Schritte

    I. Auftragen der Schichten zur Erzeugung eines Rohlings, wobei ein Komposit aus Druckmaterial schichtweise auf eine Werkebene aufgetragen wird und so ein Rohling der Polarplatte erzeugt wird.
    II. Sintern, wobei der Rohling der Polarplatte aus Schritt II erhitzt wird, wobei die Temperaturen unterhalb der Schmelztemperatur des Druckmaterials bleiben, so dass die Gestalt (Form) des Werkstückes erhalten bleibt und nach Anschluss des Schrittes eine fertige Polarplatte erzeugt wird.

2. Verfahren nach Anspruch 1 **dadurch gekennzeichnet, dass** nach dem Schritt I und vor dem Schritt II ein Schritt Ia erfolgt, wobei in diesem Prozessschritt ein überwiegender Teil des Binders aus dem Rohling der Polarplatte aus Schritt I durch katalytische Zersetzung, thermische Verdampfung, Zersetzung oder durch Lösungsmittelextraktion entfernt wird.

3. Verfahren nach Anspruch 1 oder 2 **dadurch gekennzeichnet, dass** das Komposit in Form eines Filaments ausgebildet ist.

4. Verfahren nach Anspruch 2, **dadurch gekennzeichnet, dass** das Auftragen des Komposits durch das Ablegen einzelner Materialbahnen erfolgt.

5. Verfahren nach Anspruch 1 oder 2 **dadurch gekennzeichnet, dass** das Komposit in Form eines Granulates ausgebildet ist.

6. Verfahren nach einem der Ansprüche 1 bis 5 **dadurch gekennzeichnet, dass** das Komposit wenigstens ein Polymer umfasst.

7. Verfahren nach einem der Ansprüche 1 bis 6 **dadurch gekennzeichnet, dass** das Komposit ein Metall umfasst.

8. Verfahren nach einem der Ansprüche 1 bis 7 **dadurch gekennzeichnet, dass** das Komposit einen vanadium-legierten Stahl mit wenigstens 0,1% Vanadium umfasst.

9. Verfahren nach einem der Ansprüche 1 bis 8 **dadurch gekennzeichnet, dass** das Komposit wenigstens 0,1% eines Edelmetalls umfasst.

10. Verfahren nach einem der Ansprüche 1 bis 9 **dadurch gekennzeichnet, dass** das Komposit wenigstens 0,1% Aluminium umfasst.

11. Verfahren einem der Anspruche 1 bis 5 **dadurch gekennzeichnet, dass** das Komposit aus einem elementaren Metall ausgewählt aus der Gruppe Gold, Silber, Kupfer, Aluminium, Zink, Nickel, Platin oder Zinn besteht.

12. Polarplatte **dadurch gekennzeichnet, dass** diese nach einem Verfahren gemäß einem der vorigen Ansprüche 1 bis 11 hergestellt wurde.

13. Polarplatte gemäß Anspruch 12 **dadurch gekennzeichnet, dass** diese mindestens einen innenliegende fluiddurchströmbaren Kanal umfasst.

14. Brennstoffzelle **dadurch gekennzeichnet, dass** diese wenigstens eine Polarplatte gemäß einem der Ansprüche 12 bis 13 umfasst.

15. Redox-Flow-Batterie **dadurch gekennzeichnet, dass** diese wenigstens eine Polarplatte gemäß einem der Ansprüche 12 bis 13 umfasst.

## Fig.1 (Stand der Technik)

# Fig.2

Fig. 3

100

1      2      4      5      10

# Fig.4a

Fig. 4b

Fig. 4c

Fig. 5a

Fig. 5b

Europäisches
Patentamt

European
Patent Office

Office européen
des brevets

# EUROPÄISCHER RECHERCHENBERICHT

**Nummer der Anmeldung**

EP 21 18 4782

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 213537 A1 (BOSCH GMBH ROBERT [DE]) 25. Januar 2018 (2018-01-25) * Absätze [0001] – [0006], [0015] * ----- | 1-15 | INV.<br>H01M8/0206<br>H01M8/0208<br>H01M8/021 |
| A | DE 10 2013 207075 A1 (BOSCH GMBH ROBERT [DE]) 23. Oktober 2014 (2014-10-23) * das ganze Dokument * ----- | 1-15 | H01M8/0226<br>H01M8/18 |
| A | WO 99/57769 A1 (FRAUNHOFER GES FORSCHUNG [DE]; BERGER THOMAS [DE]; PIEPKE ANGELA [DE]) 11. November 1999 (1999-11-11) * das ganze Dokument * ----- | 1-15 | |
| A | DE 10 2018 129162 A1 (SAMSON AG [DE]) 20. Mai 2020 (2020-05-20) * das ganze Dokument * ----- | 1-15 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| **München** | **13. Dezember 2021** | **Brune, Markus** |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 18 4782

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2021

| Im Recherchenbericht angeführtes Patentdokument | Datum der Veröffentlichung | Mitglied(er) der Patentfamilie | Datum der Veröffentlichung |
|---|---|---|---|
| DE 102016213537 A1 | 25-01-2018 | CN 109478655 A | 15-03-2019 |
| | | DE 102016213537 A1 | 25-01-2018 |
| | | JP 6788948 B2 | 25-11-2020 |
| | | JP 2019519904 A | 11-07-2019 |
| | | US 2019237774 A1 | 01-08-2019 |
| | | WO 2018019586 A1 | 01-02-2018 |
| DE 102013207075 A1 | 23-10-2014 | DE 102013207075 A1 | 23-10-2014 |
| | | JP 2014210974 A | 13-11-2014 |
| WO 9957769 A1 | 11-11-1999 | KEINE | |
| DE 102018129162 A1 | 20-05-2020 | DE 102018129162 A1 | 20-05-2020 |
| | | EP 3883709 A1 | 29-09-2021 |
| | | WO 2020104334 A1 | 28-05-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017201703 A1
- WO 2008049099 A1